# EUROPEAN PATENT APPLICATION

(11) **EP 4 672 266 A1**
(43) Date of publication of application: **31.12.2025**
(21) Application number: 24196196.0
(22) Date of filing: 23.08.2024
(51) Int. Cl.: G21B 1/05, G21B 1/11, H01B 12/00, H01F 6/06

(54) **PLATES FOR NON-PLANAR MAGNETIC FIELD COILS IN STELLARATORS**

(30) Priority: 28.06.2024 US 202463665597 P
(71) Applicant: Proxima Fusion GmbH, 81369 München (DE)
(72) Inventor: KUBIE, Martin, San Francisco, CA 94114 (US); GUO, Wei, 80689 München (DE)
(74) Representative: Bardehle Pagenberg Partnerschaft mbB Patentanwälte Rechtsanwälte

(57) **Abstract**

A stellarator with a non-planar magnetic field coil with a first plate as well as a method of winding a non-planar magnetic field coil for a stellarator is presented.

The first plate (100) comprises a first surface (110) with a non-planar geometry and a first recess (120). The first recess (120) extends along a first path (130) along the first surface (110). The first recess (120) has a first cross-section (140) with a first orientation (150). The first orientation (150) changes along the first path (130) with respect to the first surface (110).

## Description

### FIELD OF THE INVENTION

The present invention generally relates to plates for magnetic field coils, in particular to plates for non-planar magnetic field coils in stellarators and related methods.

### BACKGROUND

Stellarators are developed for magnetic confinement of plasmas to provide energy based on fusion reactions which occur inside the confined plasma. To provide magnetic confinement, stellarators require non-planar magnetic field coils with windings of a cable, often using superconductor cable. The use of superconductor cables allows a positive energy balance of the stellarator as the current in the cable has no electrical resistance, thereby avoiding losses. Further, the use of superconductor cable allows strong magnetic fields which improves the power balance of a stellarator. The non-planar magnetic field coils often have complex geometries. Thus, the design and manufacturing are an engineering challenge.

Recently, the use of high temperature superconductor, HTS, cable in stellarator non-planar magnetic coils is investigated. Some HTS cables, for example HTS cables comprising multiple layers of superconductor material, may have a strong field alignment sensitivity for critical current. It thus may be advantageous to align the cables with a high precision inside the magnetic field coil as this may lower the amount of required materials in the field coil. For HTS cables in particular, a need exists for improving the alignment accuracy of the cable in the final magnetic field coil. In addition, there is a need for simplifying the manufacturing process of non-planar magnetic field coils and reducing the risk of errors when assembling non-planar magnetic field coils, during winding in particular. As non-planar magnetic field coils as used in stellarators have non-planar and freeform 3D geometries, the optimal alignment of an HTS cable may change continuously along a path of a coil winding. The path may furthermore include convex and concave shapes. Thus, a solution for fixing the cable in addition to aligning at the same time, for example during manufacturing, is required.

### SUMMARY

An embodiment according to the invention is a stellarator, comprising a non-planar magnetic field coil with a first plate. The first plate comprising: a first surface with a non-planar geometry, a first recess, the first recess extending along a first path along the first surface, the first recess having a first cross-section with a first orientation, the first orientation changing along the first path with respect to the first surface.

It may be advantageous to use a first plate and optionally additional plates as mechanical structure of the non-planar magnetic field coil. This allows splitting the non-planar magnetic field coil into several parts and thus simplify manufacturing and/or assembly. The first plate may ensure mechanical stability. The first recess may be suited to allow for winding a cable for producing the magnetic field coil. The cross-section of the first recess may be used to provide an alignment for a HTS cable as will be explained in more detail below. Providing an alignment of a HTS cable improves accuracy of the assembled non-planar magnetic field coil and/or simplifies the winding of the cable during manufacturing.

An orientation of a cross-section may be determined by a normal vector in a plane perpendicular to the path for each position along the path. For example, the first orientation of the first cross-section along the first path of the first surface may be determined by a normal vector in a plane perpendicular to the first path for each position along the first path. The plate according to this embodiment allows to define a first orientation by the first plate, for example of a cable of the non-planar magnetic field coil, along the first path as will be described below. This may help ensure alignment, for example of a cable which produces the magnetic field in the non-planar magnetic field coil.

The first orientation may also be determined based on a recess angle between the first surface and at least one side of the first cross-section

The recess angle may be between 0° and 180°, for example between 30° and 150°, for example between 40° and 140°, for example between 50° and 130°, for example between 60° and 120°, for example between 70° and 110°, for example between 80° and 100°, for example between 85° and 105°; for example one of the following: 30°, 45°, 50°, 60°, 70°, 80°, 90°, 100°, 110°, 120°, 130°, 135°, 140°, 150°.

The first orientation may change along the first path with respect to the first surface. Decoupling the first orientation of the first recess from the first surface may allow to have an arbitrary change in the first orientation along the first path on the one hand and a shape of the first surface selected independently from the first orientation. This allows optimizing for different requirements, for example optimizing the first orientation based on magnetic requirements while optimizing the first surface based on mechanical requirements, for example to allow for easy stacking of the first plate with further plates and/or simplify the geometry of the first surface and thus the first plate.

The rate of change of the orientations discussed herein, for example the first orientation may have one of the following rates of change: between 0.1 rad/m and 4 rad/m, between 0.4 rad/m and 3.6 rad/m, between 0.8 rad/m and 3.2 rad/m, between 1.2 rad/m and 2.8 rad/m, between 1.6 rad/m and 2.4 rad/m, for example 2 rad/m.

In some embodiments, the rate of change may be one of the following: between 0.1 rad/m and 7 rad/m, between 0.7 rad/m and 6.3 rad/m, between 1.4 rad/m and 5.6 rad/m, between 2.1 rad/m and 4.9 rad/m, between 2.8 rad/m and 4.2 rad/m, 3.5 rad/m.

In some embodiments, the rate of change may be one of the following: between 0.5 rad/m and 6 rad/m, between 1 rad/m and 5 rad/m between 2 rad/m and 5 rad/m, between 3 rad/m and 4 rad/m.

An orientation may be defined as a respective orientation vector, for example as locally defined vectors along the length of a path or a cable. The orientation vector may be a normalized vector. An orientation may be determined by at least one reference point of the cross-section. For example, if the cross-section has a symmetry, for example a mirror symmetry, the orientation may be determined by a vector along the symmetry axis. In some embodiments, the orientation is determined by a vector between a center of the cross-section as a first reference point and a second reference point on the cross-section. The second reference point can be an edge of a polygonal shape or at the intersection of the cross-section and a reference axis, for example a reference axis determined by a symmetry of the cross-section. In one example, the orientation is determined by a minor axis of a cross-section having an elliptical shape.

The orientation of the cross-section of a recess may be described by a contact angle of a contact part of the cross-section with respect to the surface. For example, the first orientation of the first cross-section may be described for a plurality of positions along the first path as a respective contact angle of a contact part of the first cross-section.

The contact angle may be the recess angle. For example, the recess angle may be defined as the angle between a plane representing the contact of the respective surface with a HTS cable, for example the first HTS cable. The plane may be defined by at least three contact points between the first cross-section along the first path and the HTS cable, for example the first HTS cable. In some examples it may be defined as a line between two contact points in the first cross-section and a unit length along a normal vector along the first path. Contact points may be defined as the three highest raised points of the respective surface in a local segment along the first path. Thus, even if the surface is rough or irregular, the contact angle and/or the recess angle may be well-defined. In some embodiments, the contact angle and/or the recess angle may be defined based on averaging of parts of the first cross-section, for example to obtain a simpler geometry to define the contact angle and/or the recess angle.

A cross-section may have an orientation if it has a non-circular shape. The orientation may be defined as a vector between two reference points on the cross-section. Thus, the orientation of the cross-section along a path may be described by the vector as a function of the position along the path. The vector may be normalized. For example, the vector may be defined by a first point in the center of the cross-section and a second point on the cross-section, for example an edge. In other examples, the second point may be chosen at an intersection of an axis of symmetry of the cross-section and the cross-section, for example a mirror symmetry axis.

In some embodiments, the first cross-section is one or more of the following:
non-circular,
a rhomboid,
a parallelogram,
a trapezoid,
polygonal,
comprising at least one groove feature,
comprising at least one ridge feature.

Choosing the first cross-section as described above may have the advantage that the first cross-section may facilitate mechanical alignment due to the cross-section, for example alignment of a non-circular cable.

The first recess may comprise a first high temperature superconductor, HTS, cable extending along the first path. The first HTS cable may have a second cross-section with a second orientation. The first recess may fix the second orientation along the first path. In addition, or alternatively, a first part of the first cross-section may match a second part of the second cross-section.

For example, HTS cables like the first HTS cable may comprise multiple layers of superconductor material which may be arranged as a high temperature superconductor tape stack. The multiple layers of superconductor material may comprise rare earth barium copper oxide superconductor, ReBCO material. In addition or alternatively, the HTS cables, for example the first HTS cable, may comprise other materials, for example other high temperature superconductor materials or superconductor materials, for example niobium-ton or niobium-titanium alloys. Further, the first HTS cable may comprise additional non-superconductor materials like copper, copper alloys, aluminium, aluminium alloys, steel, solder etc.,

The multiple layers of superconductor material may have strong magnetic field alignment sensitivity. Thus, a precise alignment of the HTS cable enabled by the first recess may allow for aligning the HTS cable as required to increase performance and/or reduce the required amount of superconductor material to achieve a desired magnetic field strength.

The second cross-section may be one or more of the following:
non-circular,
a rhomboid,
a parallelogram,
a trapezoid,
polygonal,
a polygonal approximation of a circular shape,
a polygonal approximation of an elliptical shape,
an equiangular polygon,
an equilateral polygon,
a regular polygon,
a convex polygon,
a polygon with the following number of sides:
   between 3 and 100, between 3 and 50, between 3 and 64, between 3 and 32, between 4 and 16, between 4 and 12, 3, 4, 5, 6, 7, 8, 9, 10, 11, 12;
comprising at least one groove feature,
comprising at least one ridge feature.

The flexibility when choosing of the second cross-section may allow optimization of the HTS cables. For example, it may be desirable to have an approximation of a circular shape which can still be fixed, in particular against twisting while at the same time having the beneficial proportions of an almost circular cross-section. However, other cross-sections are possible as well.

The first recess may comprise a first high temperature superconductor, HTS, cable extending along the first path. The first HTS cable may have a second cross-section with a second orientation. The first recess may fix the second orientation along the first path. Alternatively, or in addition, a first part of the first cross-section matches a second part of the second cross-section.

The first HTS cable and/or other HTS cables mentioned below may comprise one or more superconductor materials. For example, the HTS cable may comprise rare earth barium copper oxide superconductor, ReBCO. The HTS cable may comprise multiple layers of superconductive material, for example tape stacks of superconductive material, for example ReBCO tape stacks. In addition, the first HTS cable and/or the other HTS cable may comprise further materials as stated above.

The second cross-section of the first HTS cable may facilitate alignment of the first HTS cable with the first cross-section of the first recess. For example, if the first cross-section is a parallelogram and the second cross-section is a regular polygon, for example an octagon, a part of the first cross-section, namely a set of parallel edges of the parallelogram may match a part of the second cross-section, for example two parallel sides of the octagon and fix the second orientation along the first path.

In some embodiments, at a plurality of first positions the first orientation along the first path is chosen based on one or more of the following:
a magnetic field of the stellarator,
a magnetic field of at least one further magnetic field coil of the stellarator,
a geometry of the non-planar magnetic field coil,
an orientation of multiple layers of superconductor material in the first HTS cable.

Choosing the first orientation along the first path according to one or more of the factors mentioned above may have the advantage that the first orientation along the first path may optimize an alignment of a HTS cable, for example the first HTS cable. This optimization may be based on the knowledge of the magnetic fields or geometric requirements. Using the knowledge for example of the desired magnetic field of the stellarator, the first path may be planned and optimized. For a plurality of positions along a planned first path an optimum first orientation may be determined. Further, the degrees of freedom when selecting the first orientation may be taken into account when planning the first path. In an iterative optimization process, for a specific position along the length of the first path, an optimum first orientation may be determined. The various approaches may result in an optimized orientation of multiple layers of superconductor material in a cable, for example in the first HTS cable. In some examples, the effect of further magnetic field coils of the stellarator may be the most significant contribution to the magnetic field at the position of the first path and thus for a HTS cable at the position of the first path. In those cases, the analysis of an optimized first orientation may be simplified by limiting the number of further magnetic field coils taken into account when choosing the first orientation. However, in many cases it may be beneficial to include the entire magnetic field of the stellarator in the consideration. This may include the magnetic field created by the first HTS cable.

Some embodiments may further comprise at least one first fixing member. The at least one first fixing member may be mechanically engaged with the first plate and with the first HTS cable. Alternatively, or in addition, the first fixing member may be positioned in a concave region of the first surface. Alternatively, or in addition, the first fixing member may be positioned in a first region of the first surface, so that the first fixing member in combination with the first recess and a tension of the first HTS cable constrain a position of the first HTS cable.

The first fixing member may facilitate installation of the first HTS cable, for example during winding.

The stellarator may further comprise a second plate. The second plate may comprise:
A second surface with a non-planar geometry. The second plate may further comprise: A second recess, the second recess extending along a second path along the second surface. The second recess may have a third cross-section with a third orientation. The third orientation may be changing along the second path with respect to the second surface. The second plate may form a stack with the first plate.

The second plate may be designed complementarily to the first plate to allow forming of a stack. The second recess along the second path may be designed to match the first recess along the first path. This may allow that the first HTS cable may be fixed by the first cross section and the third cross section. In other words, the first HTS cable may be fixed by sandwiching the first HTS cable between the first cross-section and the third cross-section.

The first cross-section may correspond to a first part of the second cross-section and/or a second cross-section may correspond to a second part of the second cross-section. The first part of the second cross-section and the second part of the second cross-section may be different. For example, the first part of the second cross-section may be the upper half of the second cross-section and the second part of the second cross-section may be the lower half of the second cross-section. This may facilitate sandwiching the first HTS cable between the first plate and the second plate.

In some embodiments, the third cross-section is one or more of the following:
non-circular,
a rhomboid,
a parallelogram,
a trapezoid,
polygonal,
comprising at least one groove feature,
comprising at least one ridge feature.

In some embodiments, the stack is formed in an essentially toroidal direction of the stellarator. In some embodiments, the stack is formed in an essentially poloidal direction of the stellarator.

Examples for embodiments in which the stack is formed in an essentially toroidal direction of the stellarator are described with reference to the figures below.

In other embodiments, the stack may be formed in an essentially poloidal direction of the stellarator. In these embodiments, the first plate and/or the second plate and/or additional plates may be shaped in an annular shape, for example as annular rings. In other embodiments the concept of the ring can be generalized to other annular shapes without rotational symmetry, like annular ellipses or annular general shapes defined by a variation of a length as a function of an angle, for example a poloidal angle. In some embodiments, the annular shape may be further split into segments, for example into a top and a bottom segment. Arbitrary splitting is possible.

The first surface may be mechanically connected to the second surface. In addition, or alternatively, a third surface of the first plate may be mechanically connected to a fourth surface of the second plate. In addition, or alternatively, the stack may comprise additional plates.

The mechanical connection may allow improved fixing of the first HTS cable and/or the first and the second plate with respect to each other.

The first plate may comprise: a first group of recesses. Each recess of the first group of recesses may extend along first respective paths of the first group of recesses along the first surface and may have first respective cross-sections with first respective orientations. The first respective orientations may change along the first respective paths with respect to the first surface.

A group of recesses may allow multiple windings on a plate. This may allow a more compact design. The first respective orientations may change in a consistent manner with respect to each other or the first respective orientations may change differently with respect to each other. In addition or alternatively, the group of recesses may comprise one or more additional cables, for example additional HTS cables and/or additional non superconductor-cables. The one or more additional cables may be used for additional features such as magnetic field correction coils and/or magnetic perturbation coils.

The stack may comprise any number of plates, for example three plates as the first plate, a top plate, and a bottom plate. Other examples are possible, for example with first plate, second plate, third plate etc. as described herein, wherein each of the first plate, second plate, third plate may comprise a winding of a HTS cable. Thus, each additional plate may add to the number of windings of the non-planar magnetic field coil. In addition, the plates may have bottom and top plate to complete the stack. Thus the number of plates may be for example 3, 4, 5, 6, 7, 8, 9, 10, 11, 12, 13, 14, 15, 16, 17, 18, 19, 20, 21, 22, 23, 24, 25, 26, 27, 28, 29, 30. In some embodiments, 16 plates comprising windings and two plates as top and bottom plate are used, totaling in 18 plates of the stack.

In some embodiments, the second plate comprises:
A second group of recesses. Each recess of the second group of recesses may extend along second respective paths of the second group of recesses along the second surface. Each recess of the second group of recesses may have second respective cross-sections with second respective orientations. The second respective orientations may change along the second respective paths with respect to the second surface.

The first group of recesses and/or the second group of recesses may comprise a number of recesses, for example one of the following: between 1 and 30, between 6 and 26, between 10 and 22, between 14 and 18, for example 16. In other examples, the first recess has a spiral-like shape and the first recess has for example the following number of turns: between 1 and 30, between 6 and 26, between 10 and 22, between 14 and 18, for example 16.

In some embodiments, the second recess comprises a second high temperature superconductor, HTS, cable extending along the second path. The second HTS cable may have a fourth cross-section with a fourth orientation. The second recess may fix the fourth orientation along the second path.

In some embodiments, the first path and the second path are both part of at least one winding of the magnetic field coil. The first path may connect to the second path in a first connection region of the first plate and in a second connection region of the second plate.

Combining the first and the second path split over a first plate and a second plate as described above may allow simplified design of the non-planar magnetic field coil as the connection region may be specifically designed to facilitate connection of the windings on the respective plates.

In addition or alternatively, the stellarator may further comprises a conductive connection element. The conductive connection element may connect the first HTS cable with the second HTS cable.

The conductive connection element may allow a well-defined connection between different windings of the non-planar magnetic field coil. Connecting the first and the second HTS cable via a conductive connection element may simplify the design of the non-planar magnetic field coil, for example the design of the plates and the requirements of the first orientation and the second orientation. The conductive connection element may also simplify manufacturing as the first HTS cable and/or the second HTS cable may be installed in the first and/or second plate, for example by using fixing members. Then, a connection between the installed first and second HTS cable may be achieved easily by using conductive connection elements.

In some embodiments, the second plate is mechanically engaged with the first plate. The second plate may fix the first HTS cable and/or the first plate may fix the second HTS cable.

Using a mechanical engagement of plates for fixing a HTS cable, for example using the first plate and the second plate to fix the first and/or the second HTS cable may simplify installation of first and/or second HTS cable. In some embodiments, using the mechanical engagements of plates may result in that less first fixing elements are required or even no fixing elements are required, thereby simplifying the design of the non-planar magnetic field coil and reducing costs.

In some embodiments, the first HTS cable comprises multiple layers of superconductor material with a fifth orientation. The fifth orientation may be aligned with the second orientation along the first path.

Multiple layers of superconductor material may have a strong magnetic field alignment sensitivity for critical current. If the fifth orientation is aligned with the second orientation, the invention allows for tailoring the second orientation according to material requirements, for example align the second orientation - and thus the fifth orientation - with a magnetic field of the stellarator. This alignment may result in less material of the multiple layers of superconductor material required to produce a desired field strength which may reduce the complexity and/or costs of the non-planar magnetic field coil.

In some embodiments, the fifth orientation changes with respect to the second orientation along the first path.

The rate of change of the orientations discussed herein, for example the fifth orientation with respect to the second orientation may have one of the following rates of change: between 0.1 rad/m and 4 rad/m, between 0.4 rad/m and 3.6 rad/m, between 0.8 rad/m and 3.2 rad/m, between 1.2 rad/m and 2.8 rad/m, between 1.6 rad/m and 2.4 rad/m, for example 2 rad/m.

The rate of change of the orientations discussed herein, for example the fifth orientation with respect to the second orientation may have one of the following rates of change: between 0.1 rad/m and 7 rad/m, between 0.7 rad/m and 6.3 rad/m, between 1.4 rad/m and 5.6 rad/m, between 2.1 rad/m and 4.9 rad/m, between 2.8 rad/m and 4.2 rad/m, 3.5 rad/m.

The rate of change of the orientations discussed herein, for example the fifth orientation with respect to the second orientation may have one of the following rates of change: between 0.5 rad/m and 6 rad/m, between 1 rad/m and 5 rad/m between 2 rad/m and 5 rad/m, between 3 rad/m and 4 rad/m.

Using multiple layers of superconductor material as described may allow an independent optimization of the fifth orientation based on the material requirements. It may thus be possible to independently align for example the fifth orientation based on magnetic requirements while at the same time and independently from the fifth orientation the second orientation may be optimized for example on mechanical requirements. In some embodiments the first HTS cable and/or the second HTS cable is a cable as described in US provisional application US 63/665,434, filed on the same day as this application which is incorporated by reference in its entirety.

Combining the cable as described in this application with the plates, for example the first plate, as described herein may further allow more flexibility and improved properties of the non-planar magnetic field coil.

In one embodiment, a method of winding a non-planar magnetic field coil for a stellarator is provided. The method may comprise a step of providing a first plate. The first plate may comprise a first surface with a non-planar geometry. The first plate may comprise a first recess, the first recess extending along a first path along the first surface. The first recess may have a first cross-section with a first orientation. The first orientation may change along the first path with respect to the first surface.

The method may comprise a step of providing a first high temperature superconductor, HTS, cable. The first HTS cable may have a second cross-section with a second orientation.

The method may comprise a step of aligning the second orientation of the first HTS cable with the first orientation of the first recess along the first path.

The method may comprise a step of fixing the first HTS cable to the first recess.

This method may simplify winding of a non-planar magnetic field coil for a stellarator. In particular, the first plate may make alignment of the first HTS cable more exact and simplify installation, reducing errors and/or improving the achieved alignment accuracy of the first HTS cable in the completed coil.

In some embodiments, the step of providing a first plate further comprises:
A step of choosing the first orientation along the first path based on one or more of the following: a magnetic field of the stellarator, a magnetic field of at least one further magnetic field coil of the stellarator, a geometry of the non-planar magnetic field coil, a preferential alignment direction of the first HTS cable.

Using the knowledge for example of the magnetic field of the stellarator, for example at a specific position along the first path allows to determine an optimum first orientation. In some examples, the effect of further magnetic field coils of the stellarator may be the most significant contribution to the magnetic field at the position of the first path. In those cases, the analysis of an optimized first orientation may be simplified by limiting the number of further magnetic field coils taken into account when choosing the first orientation.

The method may comprise a step of providing a second plate. The second plate may comprise: a second surface with a non-planar geometry. The second plate may comprise a second recess along a second path along the surface. The second recess may have a third cross-section with a third orientation. The third orientation may change along the second path with respect to the second surface.

Using an additional plate may have the advantage that more complex magnet designs are possible than with a single plate.

The method may comprise a step of providing a second high temperature superconductor, HTS, cable extending along the second path. The second HTS cable may have a fourth cross-section with a fourth orientation.

The method may comprise a step of aligning the fourth orientation of the second HTS cable with the third orientation of the second recess along the second path.

The method may comprise a step of fixing the second HTS cable to the second recess.

Fixing the cables to the recess, for example fixing the second HTS cable to the second recess may lead to a highly precise alignment of the cable inside the stellarator. This may reduce manufacturing and assembly tolerances.

In some embodiments, the step of fixing the first HTS cable and/or the step of fixing the second HTS cable further comprises a step of providing at least one first fixing member for fixing the first cable and/or for fixing the second HTS cable.

In some embodiments, the step of fixing the first HTS cable and/or the step of fixing the second HTS cable further comprises a step of fixing the first HTS cable and/or the second HTS cable using the at least one first fixing member.

Using at least one first fixing member may facilitate installation of the HTS cable or HTS cables, for example the first and/or second HTS cable.

In some embodiments, the step of fixing the first HTS cable and/or the step of fixing the second HTS cable further comprises a step of engaging the first plate with the second plate.

Using mechanical engagement of plates may simplify installation and may have added benefits as described above.

### BRIEF DESCRIPTION OF THE DRAWINGS

Fig. 1 shows a schematic view of a stellarator according to an embodiment.
Fig. 2a and Fig. 2b show different views of a first plate according to an embodiment.
Fig. 2c shows a first high temperature superconductor, HTS, cable according to an embodiment.
Fig. 3 shows a sectional view of a first plate according to another embodiment.
Fig. 4a and Fig. 4b show a first plate according to a different embodiment.
Fig. 5 shows a schematic cut-out of a first plate 100 with a first surface according to an embodiment.
Fig. 6 shows the first plate of Fig. 5 with a first HTS cable according to an embodiment.
Fig. 7 shows the first plate and the first HTS cable with a first fixing member according to an embodiment.
Fig. 8a, Fig. 8b, and Fig. 8c show additional embodiments of the first plate.
Fig. 9a shows a further embodiment, wherein the first plate comprises a first group of recesses.
Fig. 9b, Fig. 9c, and Fig. 9d show additional embodiments comprising a second plate.
Fig. 10a and Fig. 10b show a further embodiment with a first group of recesses.
Fig. 11 shows an embodiment in which the first plate fixes the second HTS cable.
Fig. 12 shows a three dimensional view of the plate stack of the embodiment of Fig. 11.
Fig. 13 shows a stack of plates fixing a non-circular HTS cable according to an embodiment.
Fig. 14a, Fig. 14b, and Fig. 14c show an embodiment of a connection region between a first plate and a second plate.
Fig. 15 shows an assembly of a non-planar magnetic field coil according to an embodiment in an exploded-view drawing.
Fig. 16 shows a plate stack 600 according to an embodiment.
Fig. 17 shows the non-planar magnetic field coil according to an embodiment in an assembled state.
Fig. 18 shows a flow chart of a method according to an embodiment.

### DETAILED DESCRIPTION

In the following, a detailed description with reference to the figures is provided. In the figures, identical reference signs refer to identical elements.

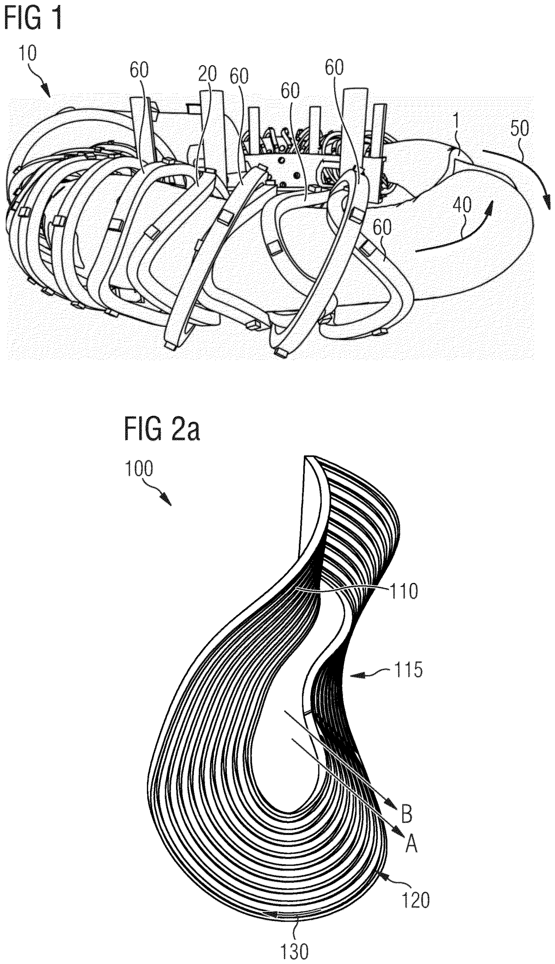

Fig. 1 shows a schematic view of a stellarator. In Fig. 1, a stellarator 10 is shown for magnetic confinement of a plasma 1. Some elements are removed for clarity. Inside the plasma 1, nuclear fusion reactions occur and release energy. The required magnetic confinement of the plasma 1 in stellarator 10 is achieved by a non-planar magnetic field coil 20 and further non-planar magnetic field coils 60 as well as additional magnetic field coils shown in Fig. 1 without reference numerals. As shown in Fig. 1, a combination of non-planar magnetic field coils and planar magnetic field coils may be used.

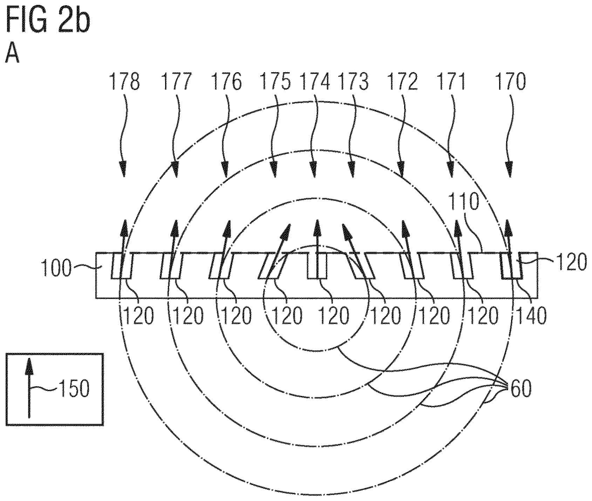

Fig. 2a and Fig. 2b show different views of a first plate 100. The first plate 100 may be part of a non-planar magnetic field coil of a stellarator, for example the stellarator 10 shown in Fig. 1. The first plate 100 comprises a first surface 110. The first surface 100 has a non-planar geometry. In both Fig. 2a and Fig. 2b, the plate 100 has a first recess 120, the first recess 120 extending along a first path 130 along the first surface 110. As shown in Fig. 2a, the first path 130 may extend along the first surface 110 in a spiral-like pattern.

Fig. 2b shows a sectional view along line A of Fig. 2a. As can be seen both in Fig. 2a and Fig. 2b, the first recess 120 has a first cross-section 140. As the first path 130 extends in a spiral-like pattern, the sectional view along line A shows the first recess 120 at different positions along the length of the first path 130. As shown in Fig. 2b, at a plurality of positions 170, 171, 172, 173, 174, 175, 176, 177, 178 along the length of the first path 130. In other words, Fig. 2b shows the first recess 120 at each turn of the spiral-like pattern of the first path 130. As shown in Fig. 2b, the first recess 120 has a first cross-section with a first orientation 150 which changes along the length of the first path 130. In Fig. 2b, the first orientation 150 is indicated by an arrow 150. In the example of Fig. 2b, at the plurality of first positions 170-178 the first orientation 150 along the first path 130 is chosen based on a magnetic field 60, for example a magnetic field of the stellarator 10 shown in Fig. 1.

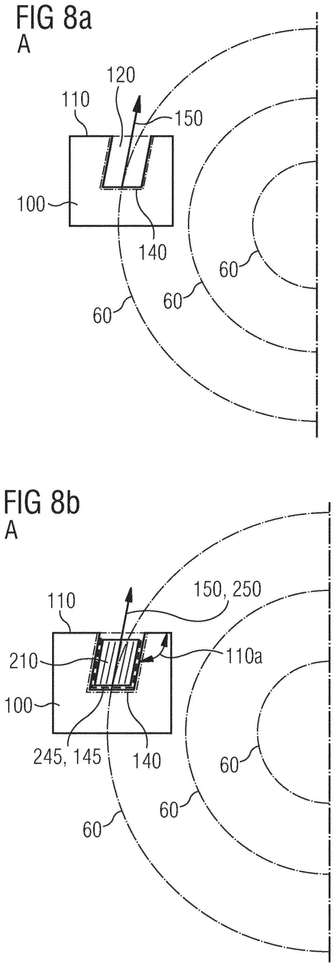

In the example of Fig. 2b the first cross-section 140 is a parallelogram. Other cross-sections are possible, in particular cross-sections which allow fixing a HTS cable as will be described below. As shown in Fig. 2b, the first orientation 220 may be determined from the cross-section, in the example of Fig. 2b the orientation is determined based on the sides of the parallelogram between the bottom of the cross-section and the open side on the first surface. The first orientation may also be determined based on a recess angle 110a between the first surface 110 and at least one side of the first cross-section as shown in Fig. 8b. The recess angle 110a may be a contact angle 110a.

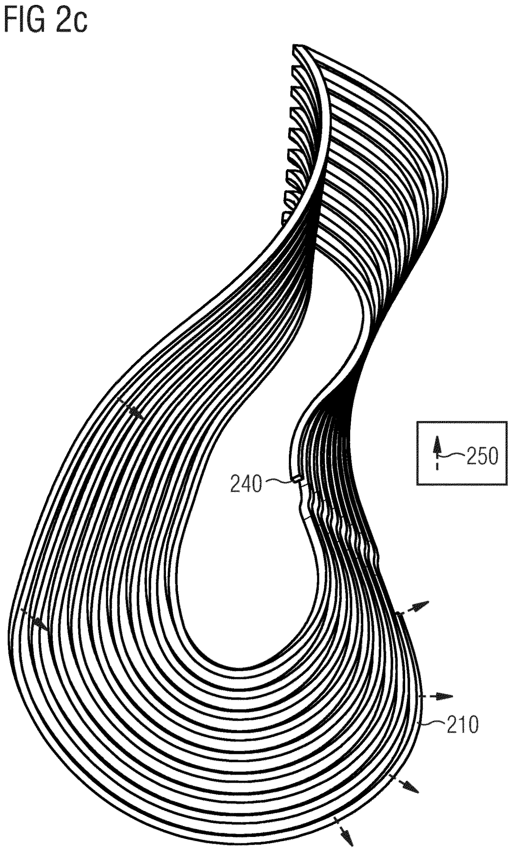

Fig. 2c shows a first high temperature superconductor, HTS, cable 210. During construction, the HTS cable 210 may be inserted into the first recess 120 of first plate 100 shown in Fig. 2a to align the HTS cable 210. In Fig. 2c the first plate 100 shown in Fig. 2a is not shown for clarity. When looking at Fig. 2a and Fig. 2c in combination, an exploded-view drawing of the first plate comprising a first HTS cable is seen. Thus, for example after winding during manufacturing, the first recess 120 comprises a first high temperature superconductor, HTS, cable 210 extending along the first path 130 shown in Fig. 2a. The first HTS cable 210 shown in Fig. 2c has a second cross-section 240 with a second orientation 250.

In the example of Fig. 2c, the second cross-section 240 is of a rectangular shape, but other shapes of the second cross-section are possible which allow fixing of the second orientation by the first cross-section.

The second orientation 250 is shown as example in several positions along the length of the first HTS cable and thus along the length of the first path 130 shown in Fig. 2a. The second orientation 250 is indicated by a dashed arrow. When assembled, the first recess 120 shown in Fig. 2a fixes the second orientation 250 shown in Fig. 2c along the first path 130.

Thus, the first plate allows precise alignment of the first HTS cable and simplifies manufacturing of a non-planar magnetic field coil, for example in a stellarator.

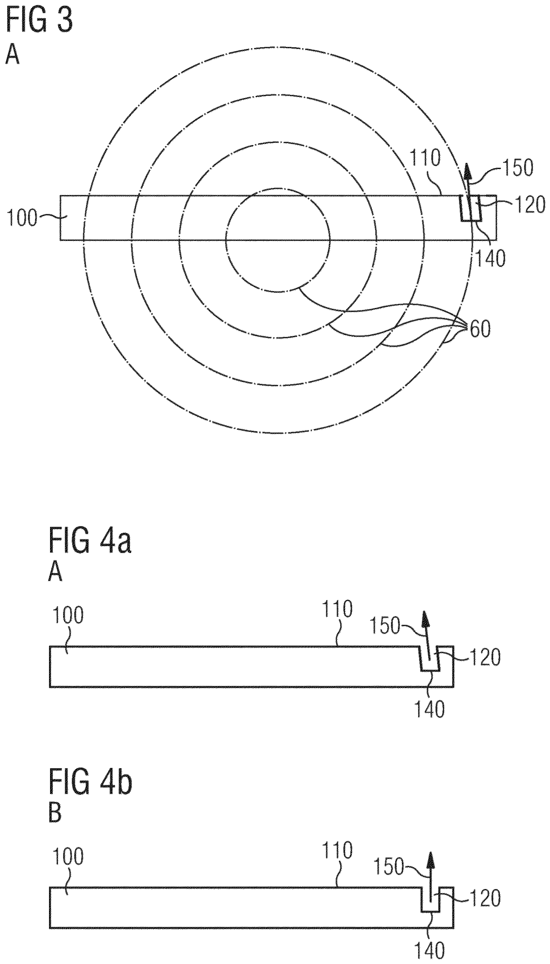

Turning to a further embodiment, Fig. 3 shows a sectional view of a first plate 100 different from the first plate shown in Fig. 2a and Fig. 2b. In the example of Fig. 3, the first plate 100 only comprises a single winding. The first plate 100 of Fig. 3 has a first recess 120. The sectional view shown in Fig. 3 is along line A which may be similar as line A shown in Fig. 2a.

Fig. 4a and Fig. 4b show a first plate according to a different embodiment. As shown in Fig. 4a and Fig. 4b, the first orientation 150 may be changing along the first path 130 with respect to the first surface 110. Fig. 4a shows a sectional view of first plate 100 along line A across the first path 130, which may be similar as shown for example in Fig. 2a. Similarly, Fig. 4b shows a sectional view of first plate 100 along line B, for example similar to line B in Fig. 2a, at a different position than position A, along the first path 130.

In the embodiments above, the first orientation 150 changing along the first path 130 with respect to the first surface 110 may allow to easily align a HTS cable inside the first recess 120. The first orientation 150 may be optimized for the requirements of the magnetic field coil. For example for the plurality of first positions, for example positions A and B, the first orientation 150 along the first path 130 is chosen based on one or more of the following: a magnetic field of the stellarator, a magnetic field of at least one further magnetic field coil of the stellarator, a geometry of the non-planar magnetic field coil, an orientation of multiple layers of superconductor material in the first HTS cable. As shown in Fig. 3, the first orientation 150 may facilitate alignment with a magnetic field 60, for example the magnetic field of the stellarator indicated schematically in Fig. 3.

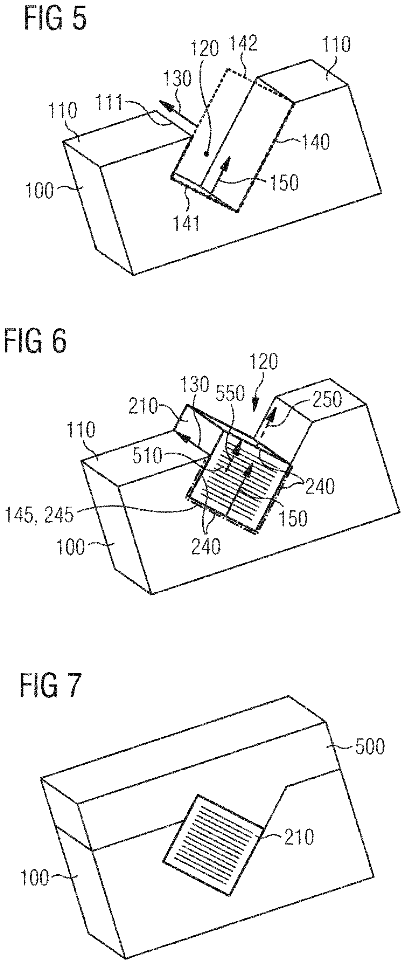

Fig. 5 shows a schematic cut-out of a first plate 100 with a first surface 110. While the first surface 110 shown in Fig. 5 is from a planar section of the first section, the first surface may have a non-planar geometry as shown in Fig. 2a. The first plate 100 has a first recess 120, the first recess 120 extending along a first path 130 along the first surface 110. The first recess 120 has a first cross-section 140 with a first orientation 150. As discussed but not shown in the schematic cut-out in Fig. 5 for clarity of presentation, the first orientation 150 changes along the first path 130 with respect to the first surface 110. The first orientation 150 may be defined as a normal vector of a bottom part 141 of the first recess. In Fig. 4 the first recess 140 has a parallelogram shape as indicated by the small-dashed line 142 for reference. The first orientation 150 may thus also be defined in parallel with the edges of the parallelogram. In the example of Fig. 5, this results in an identical first orientation 150. However, in cases where the first cross-section has a more complex shape, similar methods may be used, for example averaging curvatures of the cross sections to determine the first orientation.

While the first cross-section 140 in Fig. 5 is described as a parallelogram here there may be other ways to define the cross-section 140, for example as a polygonal cross-section obtained by closing the thick-dashed points to a closed polygon. In such cases where different cross-sections may be defined, the definition adopted at a first location may be used at other locations as well. This may ensure consistent interpretation of the first orientation 150 of the cross-section along the first path 130. In Fig. 5, the first path 130 is indicated by an arrow following edge 111 of the first surface 110, wherein edge 111 is also an edge of the recess 120. It is also possible to define the first path 130 as an extrusion path of the cross-section 140 which describes the volume of the first recess 120.

Fig. 6 shows the first plate 100 of Fig. 5 and a first HTS cable 210. In Fig. 6, the first recess 120 comprises a first high temperature superconductor, HTS, cable 210 extending along the first path 130, the first HTS cable 210 having a second cross-section 240. In the example of Fig. 6 the second cross-section 240 is a square shape. The second cross-section 240 has a second orientation 250 indicated by a dashed arrow. The second orientation 250 may be defined similarly to the first orientation 150 but based on the second cross-section 240. As shown in Fig. 6, the first recess 120 shown in Fig. 5 fixes the second orientation 250 along the first path 130. Thereby, the first HTS cable 210 is held in place by the first recess 120. As discussed above, this may simplify winding of a non-planar magnetic field coil and may improve the alignment accuracy of the first HTS cable inside the non-planar magnetic field coil and/or the stellarator.

In some embodiments the first cross-section and the second cross-section match. In the example of Fig. 6, as indicated by a dashed-dotted line, a first part 145 of the first cross-section 140 matches a second part 245 of the second cross-section 240. For clarity of presentation the dashed-dotted line is offset from the first cross-section 140 and second cross-section 240. Also, in the case where a first part 145 and a second part 245 match, the first recess may effectuate a fixing of the first HTS cable and thus prevent twisting or movement of the first HTS cable while simplifying winding of the non-planar magnetic field coil.

As shown in Fig. 6, the first HTS cable 210 comprises multiple layers of superconductor material with a fifth orientation 550. Of the multiple layers of superconductor material one layer 510 is indicated by a reference numeral. As can be seen in Fig. 6, the multiple layers of superconductor material are aligned essentially in parallel and thus also in parallel to the one layer 510. In the example of Fig. 6, the fifth orientation 550 is aligned with the second orientation 250 along the first path 130. Thus, the first recess effectively determines the alignment of the multiple layers of superconductor material in the first HTS cable. In other examples, the fifth orientation 550 may change with respect to the second orientation along the first path 130, for example by changing the alignment of the multiple layers of superconductor material within the second cross-section 240 of the first HTS cable. This may add additional flexibility between a magnetic alignment of the multiple layers of superconductor material and a mechanical alignment of the first HTS cable. In other words, this may result in two degrees of freedom for aligning the multiple layers of superconductor material, namely the first orientation and the fifth orientation which may be optimized independently.

Similar to Fig. 6, Fig. 7 shows the first plate 100 and the first HTS cable 210. In addition, Fig. 7 shows one fixing member 500 of at least one first fixing member. The at least one first fixing member 500 is mechanically engaged with the first plate 100 and with the first HTS cable 210. The first fixing member 500 may be positioned in a concave region of the first surface, for example in the concave region 115 shown in Fig. 2a.

In the following, additional examples for the first plate are described. In particular, examples will be provided how the first orientation 150 may change along the first path 130 with respect to the first surface 110.

Fig. 8a shows an additional embodiment of the first plate 100. As previously described, also in Fig. 8a the first plate 100 comprises a first surface 110 with a non-planar geometry, a first recess 120, the first recess 120 extending along a first path 130 along the first surface 110, the first recess 120 having a first cross-section 140 with a first orientation 150, the first orientation 150 changing along the first path 130 with respect to the first surface 110. In Fig. 8a the first cross-section 140 is indicated as a parallelogram 140 highlighted by a surrounding dashed-dotted line. As shown in Fig. 8a and in general, the first-cross section may be defined as the cross-section of the volume of the recess 120.

Fig. 8b corresponds to Fig. 8a. In addition, in Fig. 8b also a HTS cable 210 as described above is present. The first HTS cable 210 has a second cross-section with a second orientation 250, wherein the first recess 120 fixes the second orientation 250 along the first path 130 and/or wherein a first part 145 of the first cross-section 140 matches a second part 245 of the second cross-section 240. As shown in Fig. 8b, the first orientation 150 and the second orientation 250 are parallel.

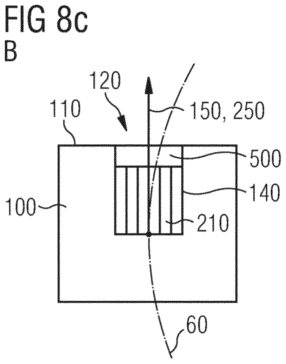

Fig. 8c illustrates how the first orientation 150 changes along the first path 130 with respect to the first surface 110. Fig. 8c shows a sectional view of first plate 100 at a position B and thus a different position along the first path than position A shown in Fig. 8a and Fig. 8b. The first path 130 may be first path 130 shown in Fig. 2a. As shown in Fig. 8c, both the first orientation 150 and the second orientation 250 are different from the first orientation and second orientation at position A shown in Fig. 8a and Fig. 8b. This allows an optimization especially of the second orientation 250 with the magnetic field 60. In Fig. 8c also a first fixing member 500 is present as described above.

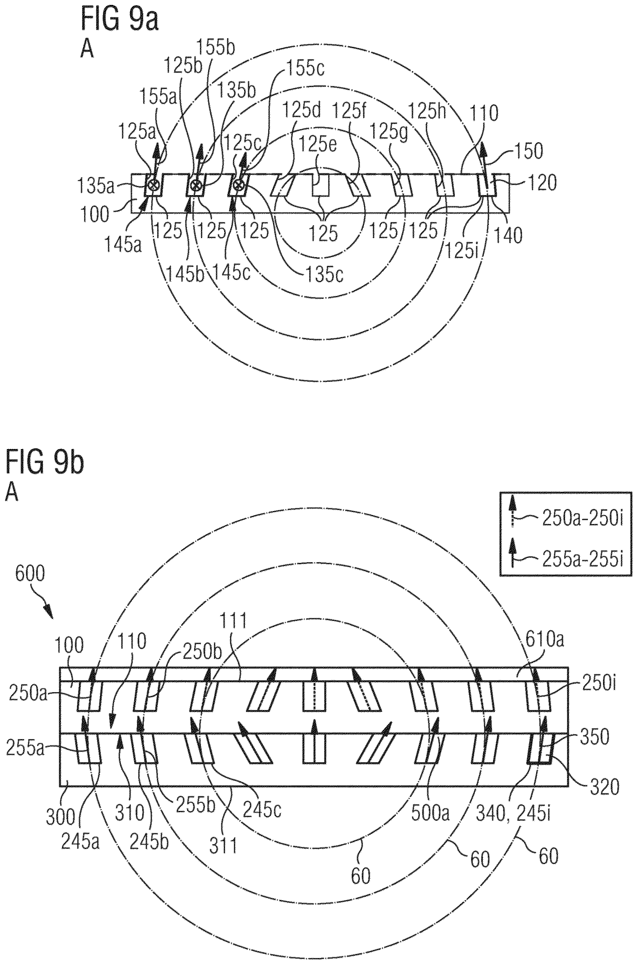

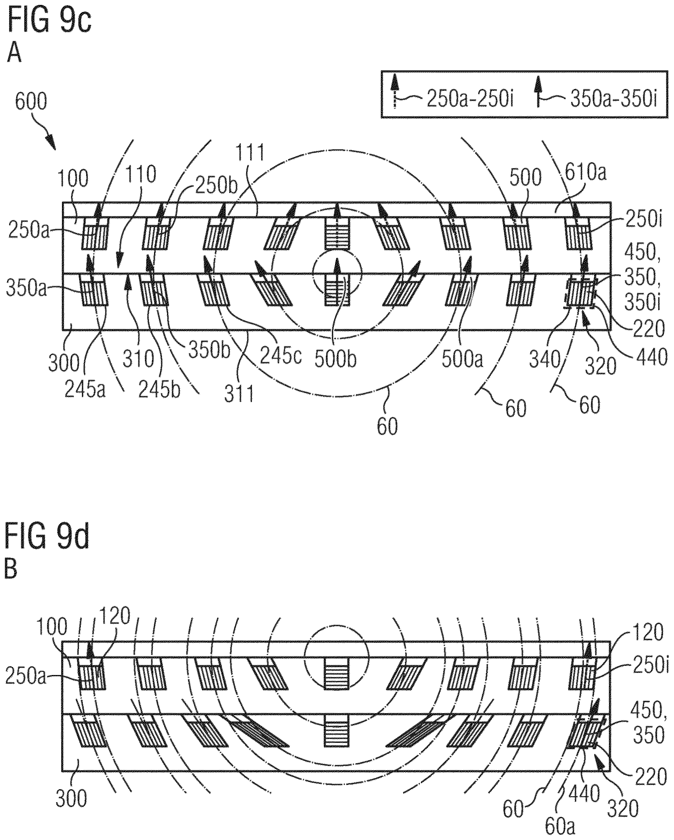

Fig. 9a shows a further embodiment, wherein the first plate 100 comprises a first group of recesses 125. Thus, Fig. 9 differs from Fig. 2b in that the recesses of the first group of recesses may not be connected to each other. In general, the example of Fig. 2b and Fig. 9a can be combined, for example the group of recesses may comprise two, three etc. recesses which are arranged in a spiral-like pattern as shown for a single recess in Fig. 2b. In the embodiment shown in Fig. 9, each recess 125a, 125b, 125c, 125b, 125e 125f, 125g, 125h, 125i of the first group of recesses 125 extend along first respective paths 135a, 135b, 135c of the first group of recesses 125 along the first surface 110 and have first respective cross-sections 145a, 145b, 145c with first respective orientations 155a, 155b, 155c. The first respective orientations change along the first respective paths 135a, 135b, 135c with respect to the first surface 110. Some embodiments may thus allow to optimize the respective orientations of the recesses at each position individually, for example with regard to a magnetic field 60.

The invention so far was mainly described with respect to a first plate. As described above the use of a first plate may allow the use of additional plates to simplify design of non-planar magnetic field coils. This will be described in the following. As a general principle, for the other plates, the properties and features described for the first plate may also apply for the other plates respectively.

The stellarator may also comprise a second plate. One embodiment of a second plate 300 is shown in a sectional view in Fig. 9b and comprises: a second surface 310 with a non-planar geometry. The second plate 300 further comprises a second recess 320, the second recess 320 extending along a second path along the second surface 310. In the embodiment of Fig. 8, the second path extends into the plane of the sectional view of Fig. 9b, similar as described for the first plate with respect to Fig. 2a and Fig. 2b. The second recess 320 has a third cross-section 340 with a third orientation 350. The third orientation 350 changes along the second path with respect to the second surface 310. As discussed with respect to Fig. 2b for the first path, the second path may have a spiral-like pattern. The second recess may also be a second group of recesses as described with respect to Fig. 9a for the first group of recesses. This will be further explained below. As stated before, a combination of spiral-like patterns for the second group of recesses is also possible.

Fig. 9b shows an example of a plate stack. As shown in Fig. 9b, the second plate 300 may form a stack 600 with the first plate 100. The first plate 100 of Fig. 9b may be similar or identical to the first plate 100 described above, for example as described with respect to Fig. 2a and Fig. 2b.

The stack 600 may be formed in an essentially toroidal direction 40 of the stellarator 10 as shown in Fig. 1, for example by combining plates similar to first plate 100 shown in Fig. 2a. Alternatively, the stack 600 may be formed in an essentially poloidal direction 50 of the stellarator 10 as shown in Fig. 1.

As shown in Fig. 9b, the first surface 110 may be mechanically connected to the second surface 310. Alternatively, or in addition, and not shown in Fig. 9b, a third surface 111 of the first plate 100 may be mechanically connected to a fourth surface 311 of the second plate 300. In some examples this may be achieved by changing the order of the plates, i. e., switching a top and a bottom plate. In other examples with more complex topologies this may be achieved at the same time. The stack may further comprise additional plates, for example plate 610a.

Further, the second plate 300 shown in Fig. 9b may comprise a second group of recesses, each recess of the second group of recesses extending along second respective paths of the second group of recesses along the second surface 310 and having second respective cross-sections 245a, 245b, 245c with second respective orientations 255a-i, the second respective orientations 255a, 255b, 255c changing along the second respective paths with respect to the second surface 310. In Fig. 9b, the cross-sections of the respective recesses are similar to each other and numbered with "a" from the left to "i" to the right. Note that for clarity of presentation not each individual recess is labelled individually.

As shown in Fig. 9a and Fig. 9b, the invention may thus allow to optimize the respective orientations of the recesses at each position individually, for example with regard to a magnetic field 60.

Fig. 9c shows a further example of a plate stack. The plate stack shown in Fig. 9c is the plate stack of Fig. 9b. Different from Fig. 9b, in the stack 600 shown in Fig. 9c, HTS cables are present in the recesses. Namely, the second recess 320 comprises a second high temperature superconductor, HTS, cable 220 extending along the second path, the second HTS cable 220 having a fourth cross-section 440 with a fourth orientation 450, wherein the second recess 320 fixes the fourth orientation 450 along the second path. As shown in Fig. 9c, in the first group of recesses 125 as well as in the second group of recesses , HTS cables with respective orientations are present. Likewise, to the fourth orientation 450 described above, each of the HTS cables has a respective fourth orientation, the respective second recess fixing the respective fourth orientation along respective second paths.

Alternatively, and not shown in Fig. 9c, the first plate may have a first recess with a first path with a spiral-like pattern so that some or all of the recess cross-sections shown in Fig. 9c are connected with each other and are part of the first recess. Likewise, the second plate may have a second recess with a third path with a spiral-like pattern, so that some or all of the recess cross-sections shown in Fig. 9c are connected with each other and are part of the second recess. A combination of these examples for the first plate and the second plate is also possible.

Further, Fig. 9c shows a first fixing member 500 as well as a group of fixing members with fixing member 500a, 500b indicated in Fig. 9c.

Fig. 9d shows a sectional view of the tape stack similar to Fig. 9c at a different position along the second paths. In Fig. 9d a first HTS cable is present in the first plate and a second HTS cable is present in the second plate. While the sectional view shown in Fig. 9b may be at a position A, the sectional view of Fig. 9d may be at a different position B, for example as shown for the first plate in Fig. 2a. For clarity of presentation, the reference numerals of Fig. 9c are not repeated in Fig. 9d. As shown for the second recess 320, the magnetic field 60a at position B at a different position along the second path is different from the magnetic field 60 at position A shown for reference in Fig. 9d. Thus, the second recess 320 has a different third orientation 350 from the third orientation 350 shown in Fig. 9c. Consequently, the fourth orientation 450 of the second HTS cable 220 is also different in Fig. 9d from the fourth orientation 450 in Fig. 9c. As in the example of Fig. 9d the first and the second path both have a spiral-like pattern, the fourth orientation 450 changes for each winding along the second path. Also, in the first plate 100 the second orientation 250 changes with each winding along the first path as indicated with arrows 250a-250i in Fig. 9c and shown exemplarily with arrows 250i and 250a in Fig. 9d. In other words, the first recess 120 fixes the second orientation 250 along the first path 130 as shown for two positions 250a and 250i along the first path as well as the other position shown in the sectional view of the first plate 100 of Fig. 9c. The same applies for the second plate 300 shown below where the second recess 320 fixes the fourth orientation 450 along the second path.

Thus, the invention allows for optimization of the orientation of the first HTS cable and/or the second HTS cable at various positions along the path. Note that in the examples of Fig. 9a, Fig. 9b, and Fig. 9c each recess may comprise an individual HTS cable. In other examples the recesses shown in the sectional views of the plate are part of a single recess which extends in a spiral-like pattern in which a single HTS cable may be present.

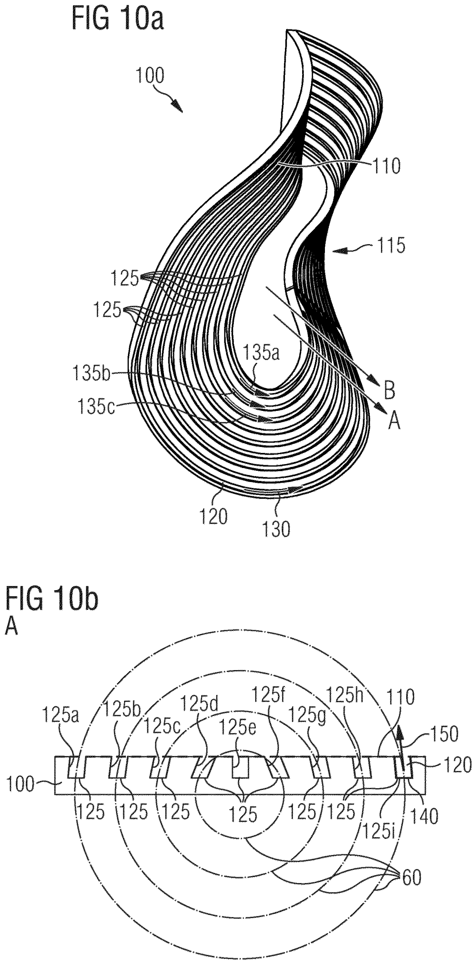

Fig. 10a and Fig. 10b show a further embodiment with a first group of recesses. Fig. 10a is similar to Fig. 2a and Fig. 10b is similar to Fig. 2b. However, while Fig. 2a and Fig. 2b have a single recess with a first path in a spiral-like pattern, Fig. 10a is different. As shown in Fig. 10a and Fig. 10b, the first plate 100 may further comprise a first group of recesses 125, for example comprising recesses 125a to 125i. The first group of recesses 125 may comprise the first recess 120 as shown in Fig. 10a. The first group of recesses 125 may be independent of a first recess 120. As for the first recess 120 and as shown in Fig. 10a, each recess 125a-i of the first group of recesses 125 may extending along first respective paths. The respective paths are shown in Fig. 10a and part of the paths are exemplarily indicated by arrows as 135a, 135b, 135c. As shown in Fig. 10a, the respective paths may be arranged essentially in parallel to each other and to the first path 130 of the first group of recesses 125. Alternatively, or in addition, the paths may also be chosen individually. The first group of recesses 125 has first respective cross-sections with first respective orientations, similar to the first recess described. The first cross-sections of the first group of recesses may be similar as shown in Fig.10a or they maybe chosen individually.

In the following, examples for different ways of fixing HTS cables will be described.

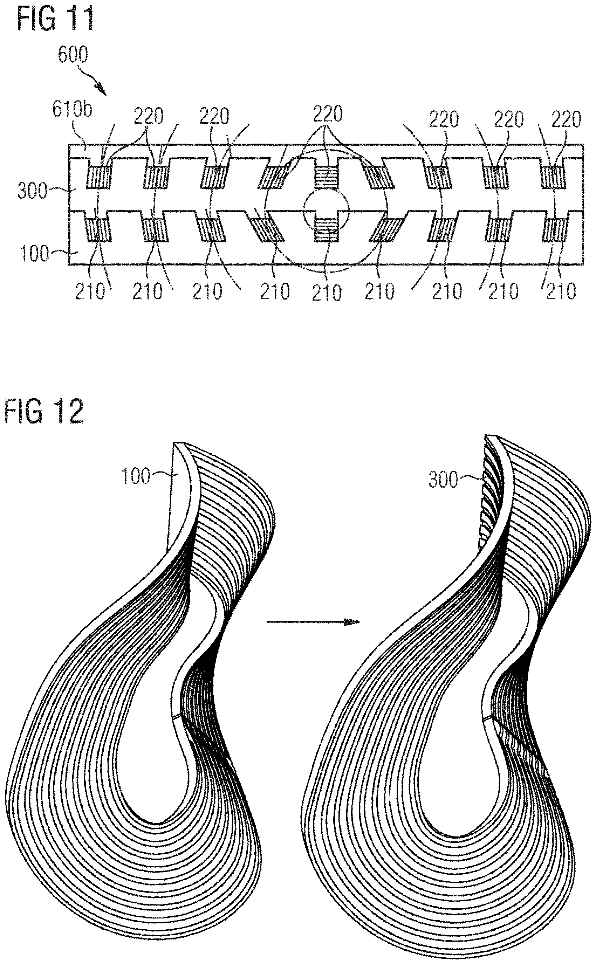

While the use of fixing members was previously discussed, the plates may also be used to achieve a fixing effect. Fig. 11 shows an embodiment in which the first plate fixes the second HTS cable. Namely, the second plate 300 of stack 600 is mechanically engaged with the first plate 100, the second plate 300 fixing the first HTS cable 210. Also, the first plate 100 may fix the second HTS cable 220. This is not shown in Fig. 11. In Fig. 11, an additional plate 610b fixes the second HTS cable 220. The fixing by plates can be combined with fixing with fixing members. For example, a fixing may be achieved only by fixing members or only by mechanically engaging of plates. In other examples fixing members may be used in some regions, for example in concave regions of a plate while the fixing may be achieved by mechanical engagement of plates in other regions, for example in convex regions.

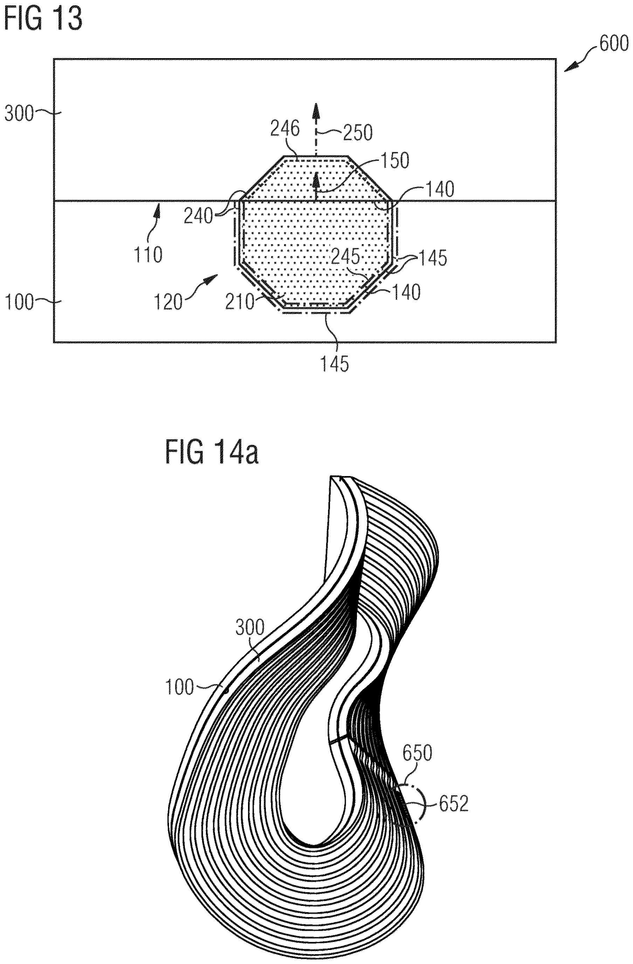

Fig. 12 shows a three dimensional view of the plate stack of Fig. 11. Fig. 12 further illustrates how a stack of plates, namely first plate 100 and second plate 300 may be used to accommodate various cross-sections of the HTS cable. For example, if the second cross-section of the first HTS cable 210 is a different shape from the shape shown in Fig. 11, for example a polygonal approximation of a circle, the fixing mechanism shown in Fig. 11 and Fig. 12 can also be used. This is further illustrated with respect to Fig. 13 below.

Fig. 13 shows a stack of plates fixing a non-circular HTS cable according to an embodiment. The stack 600 comprises a first plate 100 and a second plate 300. The first plate 100 has a first surface 110 with a non-planar geometry and a first recess 120. As described previously, the first recess 120 extends along a first path 130 along the first surface 110. As shown in Fig. 13, the first recess 120 has a first cross-section 140 with a first orientation 150. As described elsewhere, the first orientation 150 changes along the first path 130 with respect to the first surface 110.

As shown in Fig. 13, the first cross-section 140 is non-circular and has a polygonal shape corresponding connecting all but the top two edges of the octagonal cross-section shown in Fig. 13.

The first recess 120 in Fig. 13 comprises a first high temperature superconductor, HTS, cable 210 extending along the first path 130, the first HTS cable 210 having a second cross-section 240 with a second orientation 250. In Fig. 13, the first recess 120 fixes the second orientation 250 along the first path 130. In Fig. 13, a first part 145 of the first cross-section 140 matches a second part 245 of the second cross-section 240. In Fig. 13 the second part 245 of the octagonal cross-section 240 of the first HTS cable 210 is the connection between all points of the octagon except the top two edges in a counterclockwise direction starting from the top left. In addition, the second plate 300 has a recess corresponding to another part of the second cross-section 240. In Fig. 13, this other part is a complementary part 246 to the second part of the second-cross section so that the stack 600 mechanically engages the first HTS cable 210 when engaged, thus fixing the first HTS cable. Note that this allows for arbitrary cross-sections of HTS cables, for example polygonal approximations of circular cross-sections. Also, for example by using fixing elements in addition, more complex shapes can be fixed, for example shapes comprising groove and ridge features.

Thus, a precise alignment of the HTS cables may be achieved while winding of the cable may be simplified. In Fig. 13, the first plate 100 and the second plate 300 are engaged and tightly fit the second cross-section 240. However, in some embodiments the fit may be limited to contact regions which constrain the motion so that the position is fixed, for example in cases of irregular cross-sections. In some embodiments, rail-like contact regions are used for example by features of the cross sections which comprise groove features and/or ridge features. In some embodiments, a large contact region of the cross-sections allows for good thermal conductivity. In other embodiments or in addition in some regions, a limited contact region allows for good thermal insulation.

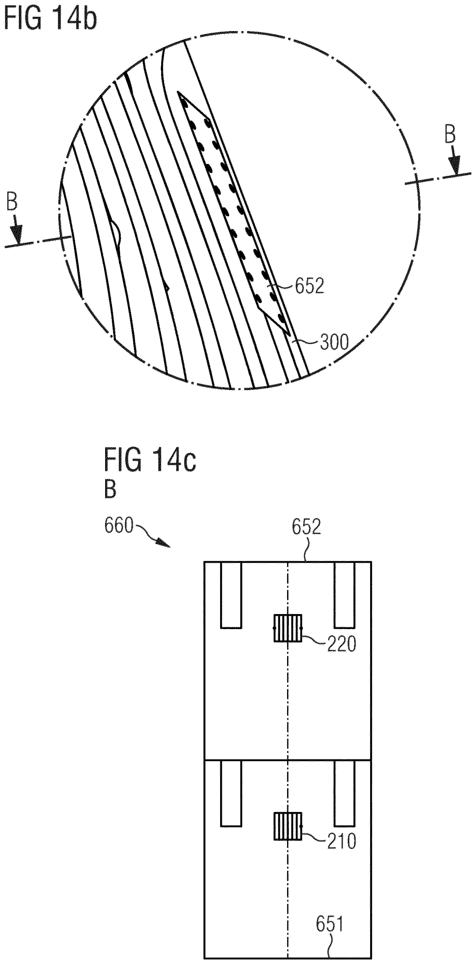

Fig. 14a, Fig. 14b, and Fig. 14c show an embodiment of a connection region between a first plate and a second plate. As previously described, the first path 130 and the second path may be both part of at least one winding of the magnetic field coil. Fig. 14a shows a stack 600 comprising a first plate 100 and a second plate 200 mechanically engaged with each other. As shown in Fig. 14a, Fig. 14b, and Fig. 14c, the first path 130 connects to the second path in a first connection region 651 of the first plate 100 and in a second connection region 652 of the second plate 300. Fig. 14b shows a magnification of the connection region 650 indicated by the circle in Fig. 14a.

Fig. 14c shows a sectional view along section B indicated in Fig. 14b. As can be seen in Fig. 14c, the non-planar magnetic field coil comprises a conductive connection element 660 with first connection region 651 and second connection region 652., The conductive connection element 660 connects the first HTS cable 210 with the second HTS cable 220.

The conductive connection element 600 may comprise conductive materials like copper, silver, etc. In some embodiments, the conductive connection element may comprise superconductive materials, for example multiple layers of superconductor material.

Thereby, the connection region 600 may allow efficient stacking of plates while allowing assembly of individual plates in a modular and/or simplified manner. In cases where a group of recesses is used as described above a group of connection regions may also be used, for example for independent connection of two different winding paths.

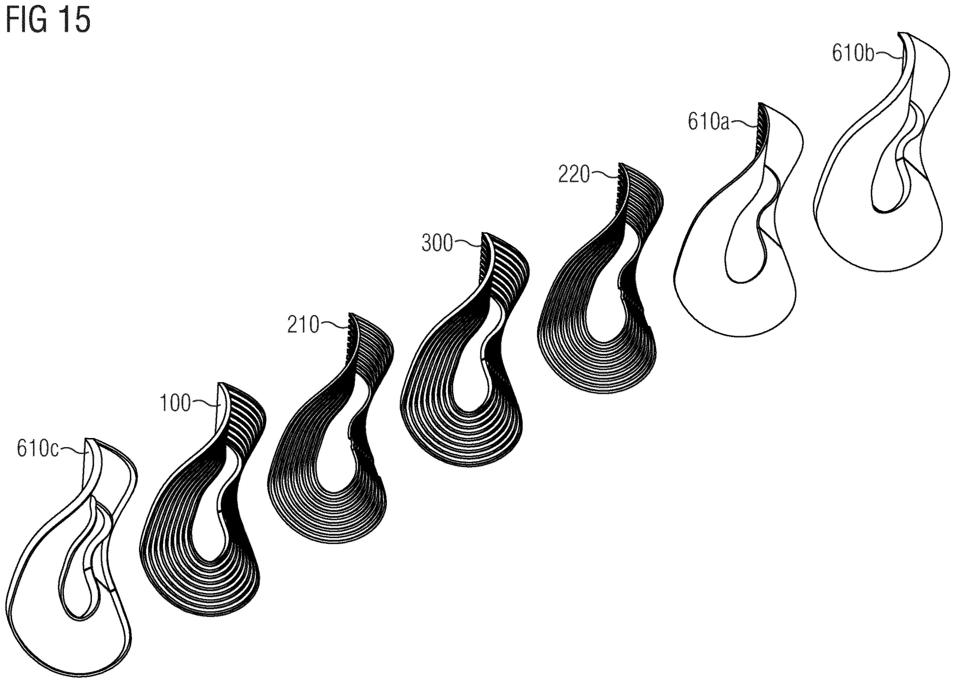

Fig. 15 shows an assembly of a non-planar magnetic field coil according to an embodiment in an exploded-view drawing. The non-planar magnetic field coil comprises a first plate 100, a second plate 300, a first HTS cable 210, and a second HTS cable 220. The assembly comprises additional plates, in this example additional plates 610a, 610b, and 610c. Here, 610a is a top plate which contributes to fixing the second HTS cable 220. 610b and 610c are casings for the non-planar superconductor coil and may also be produced as plates. In other examples, the casings 610a and 610c are not plates but constructed independently, for example to provide electrical supplies and/or cooling for the non-planar magnetic field coil.

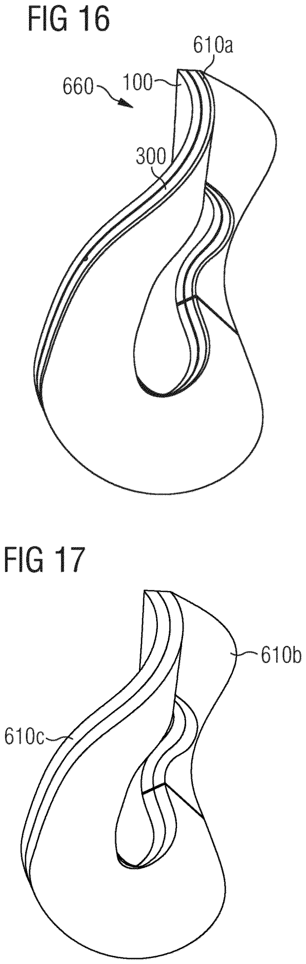

Fig. 16 shows a plate stack 600 according to an embodiment. The plate stack 600 comprises first plate 100, second plate 300, and top plate 610a as shown in Fig. 15.

Fig. 17 shows the non-planar magnetic field coil according to an embodiment in an assembled state. In the assembled state, the casings 610b and 610c are visible.

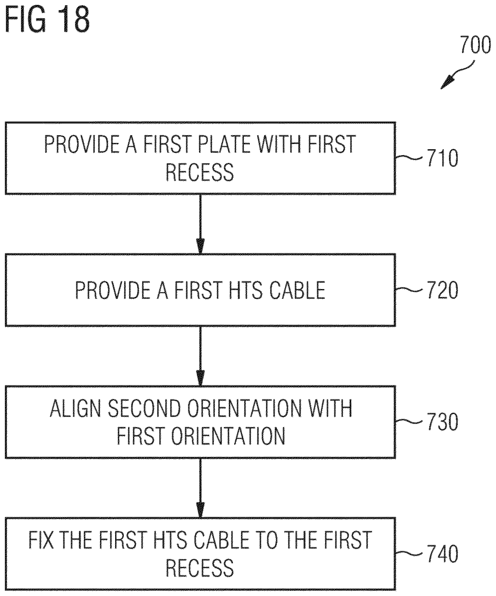

Fig. 18 shows a flow chart of a method according to an embodiment. Fig. 18 a method 700 of winding a non-planar magnetic field coil for a stellarator 10. The method 700 comprises the following steps. However, in some embodiments steps may be omitted or additional steps may be added.

In step 710, a first plate 100 is provided. The first plate 100 may be one of the first plates described elsewhere. The first plate 100 may comprise: a first surface 110 with a non-planar geometry, a first recess 120, the first recess 120 extending along a first path 130 along the first surface 110, the first recess 120 having a first cross-section 140 with a first orientation 150, the first orientation 150 changing along the first path 130 with respect to the first surface 110.

In step 720, a first high temperature superconductor, HTS, cable 210 is provided. As discussed elsewhere, the first HTS cable 210 has a second cross-section with a second orientation 250. The first HTS cable 210 may be flexible and thus not preserve the orientation. However, this may simplify winding of a non-planar magnetic field coil during manufacturing.

In step 730, the second orientation 250 of the first HTS cable 210 is aligned with the first orientation 150 of the first recess 120 along the first path 130. For example, the first HTS cable may be manually or automatically wound along the first path and aligned. As discussed elsewhere, a first fixing member 500 or a plurality of fixing members may be used to support alignment. The fixing members may be used temporarily during step 730 or remain permanently in the completed non-planar magnetic field coil.

In step 730 the first HTS cable 210 is fixed to the first recess 120. As discussed elsewhere this may be achieved by a first fixing member or a plurality of fixing members. In some examples, the fixing members only used temporarily may be removed before step 730. In some examples, an additional plate, for example second plate 300 or a top plate as described elsewhere is used to fix the first HTS cable 210 to the first recess.

As described above, additional steps may be carried out. Also, similar steps may be carried out for additional plates.

The invention has been described with respect to different embodiments above. The properties described for differently numbered elements may apply accordingly to similar elements with different numbers. For example, the second plate may have similar or identical properties as the first plate. Thus, what has been described here with respect to the first plate may also apply to the second plate. Similarly, what has been described with respect to a recess may apply to one or more of the other recesses as well. For example, what has been described for the second recess may also apply to the first recess and/or the first group of recesses and/or the second group of recesses and so on. The same applies the first HTS cable, second HTs cable etc.

The above invention has been described with focus on use of the non-planar magnetic field coils in stellarators. However, the concepts described above may be used in other contexts, for example as magnetic field coils and/or methods for the manufacturing thereof. While the description is focused on a non-planar magnetic field coil in a stellarator, other embodiments may be related to other types of field coils, planar or non-planar, for example used in tokamaks or in other devices. For example, the invention described above may also be useful in other fields with unusual geometries and hence requiring complex field alignment. In some examples, the invention may be used for particle accelerator magnets or magnetic resonance tomography. This will be detailed below with the further examples.

### FURTHER EXAMPLES

Example 1. A magnetic field coil, for example a non-planar magnetic field coil 20, comprising a first plate 100, the first plate 100 comprising: a first surface 110 with a non-planar geometry, a first recess 120, the first recess 120 extending along a first path 130 along the first surface 110, the first recess 120 having a first cross-section 140 with a first orientation 150, the first orientation 150 changing along the first path 130 with respect to the first surface 110.

Example 2. The magnetic field coil of example 1, wherein the first cross-section (140 is one or more of the following:
non-circular, a rhomboid, a parallelogram, a trapezoid, polygonal, comprising at least one groove feature, comprising at least one ridge feature.

Example 3. The magnetic field coil of example 1 or 2, wherein the first recess 120 comprises a first high temperature superconductor, HTS, cable 210 extending along the first path 130, the first HTS cable 210 having a second cross-section 240 with a second orientation 250, wherein the first recess 120 fixes the second orientation 250 along the first path 130 and/or wherein a first part 145 of the first cross-section 140 matches a second part 245 of the second cross-section 240.

Example 4. The magnetic field coil of one of the previous examples, wherein at a plurality of first positions 170-178 the first orientation 150 along the first path 130 is chosen based on one or more of the following:
an external magnetic field,
a magnetic field of at least one further magnetic field coil of an assembly,
a geometry of the magnetic field coil, for example the non-planar magnetic field coil,
an orientation of multiple layers of superconductor material in the first HTS cable 210.

Example 5. The magnetic field coil of one of examples 3 or 4, further comprising at least one first fixing member 500, wherein:
the at least one first fixing member 500 is mechanically engaged with the first plate 100 and with the first HTS cable 210 and/or
the first fixing member 500 is positioned in a concave region 115 of the first surface 110 and/or
the first fixing member 500 is positioned in a first region of the first surface 110, so that the first fixing member in combination with the first recess 120 and a tension of the first HTS cable 210 constrain a position of the first HTS cable.

Example 6. The magnetic field coil of one of examples 1 to 5, further comprising a second plate 300, the second plate 300 comprising:
a second surface 310 with a non-planar geometry,
a second recess 320, the second recess 320 extending along a second path along the second surface 310,
the second recess 320 having a third cross-section 340 with a third orientation 350,
the third orientation 350 changing along the second path with respect to the second surface 310,
wherein the second plate 300 forms a stack 600 with the first plate 100.

Example 7. The magnetic field coil of example 6, wherein
the stack 600 is formed in an essentially toroidal direction 40 of an apparatus and/or
the stack 600 is formed in an essentially poloidal direction 50 of an apparatus and/or
the first surface 110 is mechanically connected to the second surface 310 and/or
a third surface 111 of the first plate 100 is mechanically connected to a fourth surface 311 of the second plate 300 and/or
the stack 600 comprises additional plates 610a, 610b, 610c.

Example 8. The magnetic field coil of one of the previous examples, wherein the first plate 100 comprises:
a first group of recesses 125, each recess 125a-125i of the first group of recesses 125 extending along first respective paths 135a, 135b, 135c of the first group of recesses 125 along the first surface 110 and having first respective cross-sections 145a, 145b, 145c with first respective orientations 155a, 155b, 155c, the first respective orientations changing along the first respective paths 135a, 135b, 135c with respect to the first surface 110
   and/or
magnetic field coil of one of examples 6 or 7, wherein the second plate 300 comprises:
   a second group of recesses, each recess of the second group of recesses extending along second respective paths of the second group of recesses along the second surface 310 and having second respective cross-sections 245a, 245b, 245c with second respective orientations 255a-i, the second respective orientations 255a-255i changing along the second respective paths with respect to the second surface 310.

Example 9. The magnetic field coil of one of examples 6 to 8, wherein
the second recess 320 comprises a second high temperature superconductor, HTS, cable 220 extending along the second path, the second HTS cable 220 having a fourth cross-section 440 with a fourth orientation 450, wherein the second recess 320 fixes the fourth orientation 450 along the second path and
the first path 130 and the second path are both part of at least one winding of the magnetic field coil and one or more of the following applies:
   the first path 130 connects to the second path in a first connection region 651 of the first plate 100 and in a second connection region 652 of the second plate 300;
   the magnetic field coil further comprises a conductive connection element 660, the conductive connection element 660 connecting the first HTS cable 210 with the second HTS cable 220.

Example 10. The magnetic field coil of one of examples 6 to 9, wherein the second plate 300 is mechanically engaged with the first plate 100, the second plate 300 fixing the first HTS cable 210 and/or the first plate 100 fixing the second HTS cable 220.

Example 11. The magnetic field coil of one of examples 3 to 10, wherein the first HTS cable 210 comprises multiple layers of superconductor material with a fifth orientation 550, wherein:
the fifth orientation 550 is aligned with the second orientation 250 along the first path 130
   or
the fifth orientation 550 changes with respect to the second orientation 250 along the first path 130.

Example 12. A method 700 of winding a magnetic field coil, for example non-planar magnetic field coil, comprising:
a step 710 of providing a first plate 100, the first plate 100 comprising:
   a first surface 110 with a non-planar geometry,
   a first recess 120, the first recess 120 extending along a first path 130 along the first surface 110,
   the first recess 120 having a first cross-section 140 with a first orientation 150,
   the first orientation 150 changing along the first path 130 with respect to the first surface 110;
a step 720 of providing a first high temperature superconductor, HTS, cable 210, the first HTS cable 210 having a second cross-section with a second orientation 250,
a step 730 of aligning the second orientation 250 of the first HTS cable 210 with the first orientation 150 of the first recess 120 along the first path 130,
a step 730 of fixing the first HTS cable 210 to the first recess 120.

Example 13. The method of example 12, the step of providing a first plate 100 further comprising:
a step of choosing the first orientation 150 along the first path 130 based on one or more of the following:
an external magnetic field,
a magnetic field of at least one further magnetic field coil 30 of an assembly,
a geometry of the magnetic field coil, for example the non-planar magnetic field coil 20,
a preferential alignment direction of the first HTS cable 210.

Example 14. The method of example 12 or 13, further comprising:
a step of providing a second plate 300, the second plate 300 comprising:
   a second surface 310 with a non-planar geometry,
   a second recess 320 along a second path along the surface, wherein
   the second recess 320 has a third cross-section 340 with a third orientation 350,
   the third orientation 350 changing along the second path with respect to the second surface 310,
a step of providing a second high temperature superconductor, HTS, cable 220 extending along the second path, the second HTS cable 220 having a fourth cross-section 440 with a fourth orientation 450,
a step of aligning the fourth orientation 450 of the second HTS cable 220 with the third orientation 350 of the second recess 320 along the second path,
a step of fixing the second HTS cable 220 to the second recess 320.

Example 15. The method of one of examples 12 to 14, wherein the step of fixing the first HTS cable 210 and/or the step of fixing the second HTS cable 220 further comprises at least one of the following steps:
a step of providing at least one first fixing member 500 for fixing the first cable and/or for fixing the second HTS cable 220;
a step of fixing the first HTS cable 210 and/or the second HTS cable 220 using the at least one first fixing member 500;
a step of engaging the first plate 100 with the second plate 300.

## Claims

1. A stellarator (10), comprising:
a non-planar magnetic field coil (20) with a first plate (100), the first plate (100) comprising:
a first surface (110) with a non-planar geometry,
a first recess (120), the first recess (120) extending along a first path (130) along the first surface (110),
the first recess (120) having a first cross-section (140) with a first orientation (150),
the first orientation (150) changing along the first path (130) with respect to the first surface (110).

2. The stellarator (10) of claim 1, wherein the first cross-section (140) is one or more of the following:
non-circular,
a rhomboid,
a parallelogram,
a trapezoid,
polygonal,
comprising at least one groove feature,
comprising at least one ridge feature.

3. The stellarator (10) of claim 1 or 2, wherein the first recess (120) comprises a first high temperature superconductor, HTS, cable (210) extending along the first path (130), the first HTS cable (210) having a second cross-section (240) with a second orientation (250), wherein the first recess (120) fixes the second orientation (250) along the first path (130) and/or wherein a first part (145) of the first cross-section (140) matches a second part (245) of the second cross-section (240).

4. The stellarator (10) of the previous claim, wherein at a plurality of first positions (170-178) the first orientation (150) along the first path (130) is chosen based on one or more of the following:
a magnetic field of the stellarator (10),
a magnetic field of at least one further magnetic field coil (30) of the stellarator (10),
a geometry of the non-planar magnetic field coil (20),
an orientation of multiple layers of superconductor material in the first HTS cable (210).

5. The stellarator (10) of one of claims 3 or 4, further comprising at least one first fixing member (500), wherein:
the at least one first fixing member (500) is mechanically engaged with the first plate (100) and with the first HTS cable (210) and/or
the first fixing member (500) is positioned in a concave region (115) of the first surface (110) and/or
the first fixing member (500) is positioned in a first region of the first surface (110), so that the first fixing member in combination with the first recess (120) and a tension of the first HTS cable (210) constrain a position of the first HTS cable (210).

6. The stellarator (10) of one of claims 1 to 5, further comprising a second plate (300), the second plate (300) comprising:
a second surface (310) with a non-planar geometry,
a second recess (320), the second recess (320) extending along a second path along the second surface (310),
the second recess (320) having a third cross-section (340) with a third orientation (350),
the third orientation (350) changing along the second path with respect to the second surface (310),
wherein the second plate (300) forms a stack (600) with the first plate (100).

7. The stellarator (10) of claim 6, wherein
the stack (600) is formed in an essentially toroidal direction (40) of the stellarator (10) and/or
the stack (600) is formed in an essentially poloidal direction (50) of the stellarator (10) and/or
the first surface (110) is mechanically connected to the second surface (310)
and/or
a third surface (111) of the first plate (100) is mechanically connected to a fourth surface (311) of the second plate (300) and/or
the stack (600) comprises additional plates (610a, 610b, 610c), and/or
wherein the second plate (300) comprises:
a second group of recesses, each recess of the second group of recesses extending along second respective paths of the second group of recesses (325) along the second surface (310) and having second respective cross-sections (245a, 245b, 245c) with second respective orientations (255a-255i), the second respective orientations (255a-255i) changing along the second respective paths with respect to the second surface (310).

8. The stellarator (10) of one of the previous claims, wherein the first plate (100) comprises:
a first group of recesses (125), each recess (125a-125i) of the first group of recesses (125) extending along first respective paths (135a, 135b, 135c) of the first group of recesses (125) along the first surface (110) and having first respective cross-sections with first respective orientations, the first respective orientations changing along the first respective paths (135a, 135b, 135c) with respect to the first surface (110).

9. The stellarator (10) of one of claims 6 to 8, wherein
the second recess (320) comprises a second high temperature superconductor, HTS, cable (220) extending along the second path, the second HTS cable (220) having a fourth cross-section (440) with a fourth orientation (450), wherein the second recess (320) fixes the fourth orientation (450) along the second path and
the first path (130) and the second path are both part of at least one winding of the magnetic field coil and one or more of the following applies:
the first path (130) connects to the second path in a first connection region (651) of the first plate (100) and in a second connection region (652) of the second plate (300);
the stellarator (10) further comprises a conductive connection element (660), the conductive connection element (660) connecting the first HTS cable (210) with the second HTS cable (220).

10. The stellarator (10) of one of claims 6 to 9, wherein the second plate (300) is mechanically engaged with the first plate (100), the second plate (300) fixing the first HTS cable (210) and/or the first plate (100) fixing the second HTS cable (220).

11. The stellarator (10) of one of claims 3 to 10, wherein the first HTS cable (210) comprises multiple layers of superconductor material with a fifth orientation (550), wherein:
the fifth orientation (550) is aligned with the second orientation (250) along the first path (130)
or
the fifth orientation (550) changes with respect to the second orientation (250) along the first path (130).

12. A method (700) of winding a non-planar magnetic field coil for a stellarator (10), comprising:
a step (710) of providing a first plate (100), the first plate (100) comprising:
a first surface (110) with a non-planar geometry,
a first recess (120), the first recess (120) extending along a first path (130) along the first surface (110),
the first recess (120) having a first cross-section (140) with a first orientation (150),
the first orientation (150) changing along the first path (130) with respect to the first surface (110);
a step (720) of providing a first high temperature superconductor, HTS, cable (210), the first HTS cable (210) having a second cross-section with a second orientation (250),
a step (730) of aligning the second orientation (250) of the first HTS cable (210) with the first orientation (150) of the first recess (120) along the first path (130),
a step (730) of fixing the first HTS cable (210) to the first recess (120).

13. The method of claim 12, the step of providing a first plate (100) further comprising:
a step of choosing the first orientation (150) along the first path (130) based on one or more of the following:
a magnetic field of the stellarator (10),
a magnetic field of at least one further magnetic field coil (30) of the stellarator,
a geometry of the non-planar magnetic field coil (20),
a preferential alignment direction of the first HTS cable (210).

14. The method of claim 12 or 13, further comprising:
a step of providing a second plate (300), the second plate (300) comprising:
a second surface (310) with a non-planar geometry,
a second recess (320) along a second path along the surface, wherein
the second recess (320) has a third cross-section (340) with a third orientation (350),
the third orientation (350) changing along the second path with respect to the second surface (310),
a step of providing a second high temperature superconductor, HTS, cable (220) extending along the second path, the second HTS cable (220) having a fourth cross-section (440) with a fourth orientation (450),
a step of aligning the fourth orientation (450) of the second HTS cable (220) with the third orientation (350) of the second recess (320) along the second path,
a step of fixing the second HTS cable (220) to the second recess (320).

15. The method of one of claims 12 to 14, wherein the step of fixing the first HTS cable (210) and/or the step of fixing the second HTS cable (220) further comprises at least one of the following steps:
a step of providing at least one first fixing member (500) for fixing the first cable and/or for fixing the second HTS cable (220);
a step of fixing the first HTS cable (210) and/or the second HTS cable (220) using the at least one first fixing member (500);
a step of engaging the first plate (100) with the second plate (300).
